# EUROPÄISCHE PATENTSCHRIFT

(11) **EP 1 872 927 B1**
(45) Veröffentlichungstag und Bekanntmachung des Hinweises auf die Patenterteilung: **10.03.2010**
(21) Anmeldenummer: 07033501.3
(22) Anmeldetag: 27.06.2007
(51) Int. Cl.: B29C 47/90

(54) **Kalibrierplatte für ein Extrusionswerkzeug zur Herstellung von Kunststoffprofilen**
Calibrating plate for an extrusion tool for manufacturing plastic profiles
Plaque de calibrage pour un outil d'extrusion destiné à la fabrication de profilés en plastique

(30) Priorität: 29.06.2006 AT 11002006
(43) Veröffentlichungstag der Anmeldung: 02.01.2008
(73) Patentinhaber: Technoplast Kunststofftechnik GmbH & Co KG, 4563 Micheldorf (AT)
(72) Erfinder: Dorninger, Frank, Ing., 4563 Micheldorf (AT); Schimmel, Uwe, 4550 Kremsmünster (AT)
(74) Vertreter: Babeluk, Michael

(56) Entgegenhaltungen:
- EP-A2- 1 346 814
- AT-U1- 3 321
- DE-U1- 20 111 198
- JP-A- 9 123 249

## Beschreibung

Die Erfindung betrifft eine Kalibrierplatte für ein Extrusionswerkzeug zur Herstellung von Kunststoffprofilen gemäß dem Oberbegriff von Patentanspruch 1.

Die Standzeit von Kalibrierwerkzeugen im Allgemeinen und von Kalibrierplatten im Besonderen hängt primär vom Verschleiß an kritischen Bereichen der Profilkontur ab. Diese kritischen Bereiche sind vor allem Nuten, die beispielsweise zur Aufnahme von Dichtungen bestimmt sind. Die Vorsprünge der Kalibrierplatten, die zur Formung und Kalibrierung dieser Nuten bestimmt sind, verschleißen besonders schnell und sind daher kritisch für die Standzeit der Kalibrierplatte bzw. des Kalibrierwerkzeugs.

Um diese Nachteile zu vermeiden und die Werkzeugstandzeit zu erhöhen sind Einsatzteile bekannt geworden, die aus einem Werkstoff mit besonders großer Härte bzw. Abriebfestigkeit bestehen. So sind diese bekannten Einsatzteile beispielsweise aus Hartmetall oder Sinterwerkstoffen hergesteilt.

Ein Problem ist jedoch die Befestigung der Einsatzteile in den Kalibrierplatten. Es sind Lösungen bekannt, bei denen die Kalibrierplatten mehrteilig ausgeführt sind, um die Einsatzteile zu halten, wie dies in der US 5,626,807,A beschrieben ist. Die EP 0 936 053 beschreibt eine Keilverbindung zur Befestigung der Einsatzteile. Andere bekannte Lösungen zeigen Presssitze oder Klebeverbindungen. Allen diesen Lösungen ist gemeinsam, dass die Herstellung aufwendig ist und dass die Montage und vor allem die Demontage der Einsatzteile einen besonderen Arbeitsaufwand mit sich bringt und fehleranfällig ist.

Eine Lösung, die die oben beschriebenen Probleme zumindest teilweise vermeidet, ist in der DE 102 22 922 A beschrieben. Bei dieser Lösung wird der Einsatzteil durch eine Führungsfläche gehalten und in Axialrichtung durch einen Anschlag gesichert. Der Anschlag erstreckt sich dabei über einen Großteil des Umfangsbereichs des Halteteils. Es hat sich herausgestellt, dass es bei Auftreten von Produktionstoleranzen, wie sie bei hoch verschleißfesten Bauteilen nicht ganz vermieden werden können, zu einem lockeren Sitz der Einsatzteile kommen kann, was naturgemäß unerwünscht ist. Insbesondere kann es zu geringfügigen Schwenkbewegungen um die Längsachse kommen, die zu einer Verschlechterung der Profilqualität führen und die Standzeit des Werkzeugs verringern, da die Führungen ausgeschlagen werden.

Aufgabe der vorliegenden Erfindung ist es, eine Lösung anzugeben, die diese Nachteile vermeidet und einen sicheren Sitz der Einsatzteile gewährleistet.

Erfindungsgemäß werden diese Aufgaben durch die Merkmale von Patentanspruch 1 gelöst.

Wesentlich an der Erfindung ist, dass durch die Nut eine Schwenkbewegung des Einsatzteils um die Extrusionsachse verhindert wird, wobei ein allfälliges Spiel dadurch unterdrückt wird, dass durch die vom herzustellenden Profil auf den Einsatzteil ausgeübten Reibungskräfte ein Drehmoment um eine Achse senkrecht zur Extrusionsrichtung ausgeübt wird, die im Wesentlichen durch den Begrenzungsanschlag geht. Dadurch wird im stromabwärtigen Abschnitt des Einsatzteils die Nut auf ihr Gegenstück, den Vorsprung der Kalibrierplatte gedrückt und jegliches Spiel ausgeschlossen. Dadurch wird insbesondere eine sichere seitliche Führung erreicht.

Ein besonderer Vorteil der vorliegenden Erfindung liegt darin, dass im Grundkörper der Kalibrierplatte praktisch nur zylindrische Flächen, d.h. Flächen, die aus zur Extrusionsachse parallelen Erzeugenden bestehen, hergestellt werden müssen. Lediglich die Ausnehmung für den Begrenzungsanschlag ist separat einzuarbeiten.

Die Einsatzteile der Erfindung können als Standardteile ausgebildet werden, die austauschbar und wiederverwendbar sind. Die Austauschbarkeit wird dadurch erleichtert, dass die Einsatzteile ohne plastische Verformung im Grundkörper der Kalibrierplatte gehalten werden, wie sie etwa bei der Lösung nach der DE 102 22 922 A erforderlich ist, um einen entsprechenden Sitz der Einsatzteile zu gewährleisten.

Das erfindungsgemäße System ermöglicht darüber hinaus eine sehr einfache Herstellung sowohl des Einsatzteils als auch der Kalibrierplatte.

Eine besonders einfache Lösung wird dadurch erreicht, dass die Nut des Halteabschnitts einen Querschnitt in der Form eines Kreisabschnitts aufweist. Dadurch werden insbesondere scharfe Kanten vermieden und große Krümmungsradien erreicht, was sowohl im Hinblick auf die auftretenden Spannungen als auch im Hinblick auf die Herstellung des Einsatzteils günstig ist. Der. Aufbau kann dadurch besonders vereinfacht werden. dass der Halteabschnitt außerhalb der Nut nur aus Zylinderflächen mit zur Extrusionsachse parallelen Erzeugenden besteht.

Eine weitere besonders begünstigte Ausführungsvariante der Erfindung sieht vor, dass der Halteabschnitt eine größte Breite aufweist, die größer ist als die größte Breite des Formgebungsabschnitts. Auf diese Weise kann eine besonders sichere Verankerung des Einsatzteils im Grundkörper der Kalibrierplatte sichergestellt werden.

Eine besonders begünstige Lösung sieht vor, dass der Begrenzungsanschlag am stromaufwärtigen Ende des Halteabschnitts angeordnet ist. Dadurch kann ein optimales Drehmoment erreicht werden, das den Einsatzteil im Betrieb sicher im Grundkörper der Kalibrierplatte verspannt. Als besonders vorteilhaft hat es sich in diesem Zusammenhang herausgestellt, wenn der Begrenzungsanschlag innerhalb eines Bereichs angeordnet ist, der nicht mehr als 10%, vorzugsweise nicht mehr als 6% der Länge des Einsatzteils gerechnet von der stromaufwärtigen Stirnfläche ausmacht.

Im Übrigen ist es von besonderem Vorteil, wenn der Begrenzungsanschlag eine zur Extrusionsachse geneigte Anschlagfläche aufweist. Dies hat eine Vereinfachung bei der Herstellung zur Folge.

Eine besonders begünstigte Ausführungsvariante der Erfindung sieht vor, dass die Nut in einem Bereich des Halteabschnitts liegt, der dem Formgebungsabschnitt genau gegenüberliegt. Bei einem symmetrischer Einsatzteil bedeutet dies, dass die Nut symmetrisch zur Symmetrieebene des gesamten Teils ist. Aber auch dann, wenn der Einsatzteil nicht völlig symmetrisch ist, sollte die Nut symmetrisch zu einer Ebene angeordnet sein, die einer Symmetrieebene am nächsten kommt. Dadurch wird erreicht, dass das Drehmoment, das durch die Reibungskräfte vom Profil auf den Einsatzteil ausgeübt wird, eine senkrecht auf die Nut wirkende Kraft erzeugt, ohne ein Moment auszuüben, das den Einsatzteil aus der Extrusionsrichtung zu verdrehen versucht.

Von besonderem Vorteil ist es, wenn der Einsatzteil durch Pulverspritzguss hergestellt ist. Das Pulverspritzgießen (Powder Injection Molding, PIM) ist ein spezielles Herstellungsverfahren, bei dem ein spezielles Metall oder Keramikpulver mit einem geeigneten Kunststoff gemischt wird, und in der Art von Kunststoffspritzguss zu entsprechenden Formteilen verarbeitet wird. Aus dem so hergestellten Vorteil wird in einem anschließenden Verarbeitungsprozess der Kunststoffanteil, der sogenannte Binder thermisch oder chemisch/physikalisch entfernt, sodass ein poröser Metall oder Keramikkörper erhalten wird. Dieser wird unter hohen Temperaturen unter entsprechender Schrumpfung zum Fertigteil gesintert.

Der Pulverspritzguss ermöglicht es Bauteile auch komplexer Geometrie, kostengünstig in größeren Stückzahlen herzustellen, wobei gleichzeitig höchste Anforderungen an die Werkstoffeigenschaften erfüllbar sind. Durch die Anwendung dieses Verfahrens können im Gegensatz zu herkömmlichen Sinterverfahren Einsatzteile ohne Nachbearbeitung hergestellt werden, die beispielsweise Anlaufschrägen aufweisen.

Ferner kann eine besonders leichte Abstimmung des Extrusionswerkzeugs dadurch erreicht werden, dass ein Bausatz von Einsatzteilen zur Verfügung steht, die einen Formgebungsabschnitt aufweisen, der in unterschiedlichen Ausmaß gegenüber dem Halteabschnitt versetzt ist. Bei der Abstimmung von Werkzeugsystemen ist es stets erforderlich, geringfügige geometrische Veränderungen an den Kalibratoren vorzunehmen, um die gewünschte Profilform und Qualität zu erreichen. Dies ist ein aufwendiger Vorgang, der einen hohen personellen und maschinellen Einsatz erfordert. Durch das Vorsehen eines Bausatzes von Einsatzteilen kann nun diese Abstimmarbeit wesentlich erleichtert werden. Die einzelnen Einsatzteile weisen geringfügige geometrische Unterschiede auf, sodass durch Austauschen der jeweiligen Einsatzteile die Geometrie es Werkzeugs auf einfache Weise so lange verändert werden kann, bis das gewünschte Ergebnis erzielt wird.

In der Folge wird die Erfindung anhand der in den Figuren dargestellten Ausführungsvarianten näher erläutert. Es zeigen:
- Fig. 1: einen erfindungsgemäßen Einsatzteil in einer Ansicht von hinten;
- Fig. 2: den Einsatzteil von Fig. 1 in einer seitlichen Ansicht;
- Fig. 3: und Fig.4 einen erfindungsgemäßen Einsatzteil jeweils in einer axonometrischen Darstellung;
- Fig. 5: eine Ausführungsvariante einer Kalibrierplatte in einer Draufsicht;
- Fig. 6: eine alternative Ausführungsvariante einer Kalibrierplatte;
- Fig. 7: ein Detail von Fig. 6; und
- Fig. 8: einen Bausatz von Einsatzteilen.

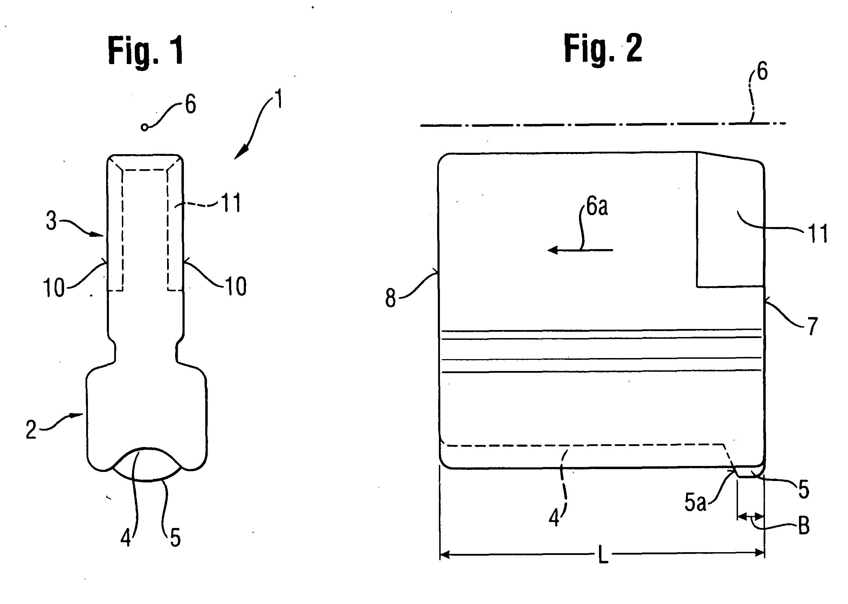

Der Einsatzteil 1, der in Fig. 1 und Fig. 2 dargestellt ist, besteht grundsätzlich aus einem Halteabschnitt 2 und einem Formgebungsabschnitt 3. An der Unterseite des Formgebungsabschnitts 3 ist eine Nut 4 mit kreissektorförmigem Querschnitt ausgebildet. An einem Ende der Nut 4 ragt aus dem Nutgrund ein Begrenzungsanschlag 5 vor, der dazu dient den Einsatzteil 1 in Axialrichtung zu halten. Die Extrusionsachse bzw. eine dazu parallele Achse ist allgemein mit 6 bezeichnet. In Fig. 2 ist zusätzlich die Extrusionsrichtung mit dem Teil 6a angezeigt. Es ist ersichtlich, dass der Begrenzungsanschlag 5 unmittelbar an der stromaufwärtigen Stirnfläche 7 des Einsatzteils 1 angeordnet ist. Abgesehen vom Begrenzungsanschlag 5 ist der Halteabschnitt 2 nur aus .Zylinderflächen 9 zusammengesetzt. Das sind Flächen die aus Erzeugenden bestehen, die zur Extrusionsachse 6 parallel sind. Aus Fig. 2 ist ersichtlich, dass der Begrenzungsanschlag 5 eine Erstreckung B in axialer Richtung aufweist, die etwa einem Zehntel der Gesamtlänge L des Einsatzteils entspricht. Eine Anschlagfläche 5a des Begrenzungsanschlag 5 ist gegenüber der Ebene der stromaufwärtigen Stirnfläche 7 geneigt. Der Formgebungsabschnitt 3 weist zwei zueinander parallele Längsseiten 10 auf, die an der stromaufwärtigen Seite mit Einlauftchrägen 11 versehen sind, die in einem Winkel von etwa 10° angeordnet sind und das Auflaufen des hier nicht dargestellten Profils erleichtern.

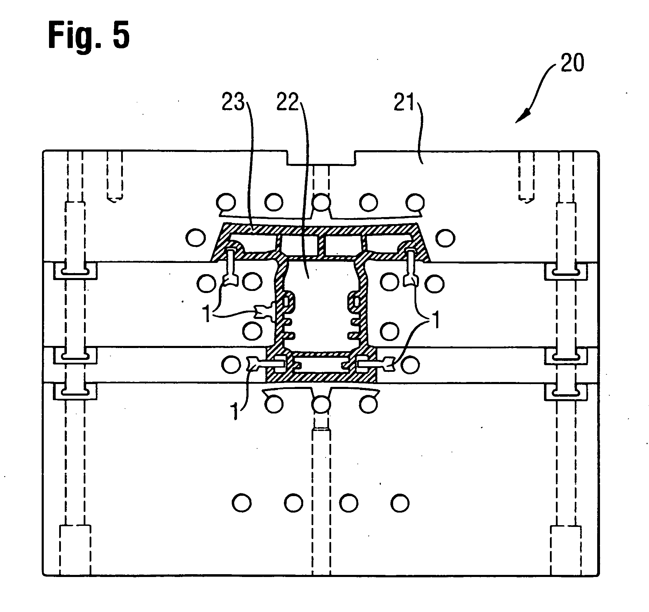

Fig. 5 zeigt eine Kalibrierplatte 20 mit einem plattenförmigen Grundkörper 21, der eine Öffnung 22 zur Kalibrierung eines Kunststoffprofils 23 aufweist. An insgesamt fünf kritischen Stellen des Profils sind Einsatzteile 1 eingesetzt, die auf den Umfang des Profils 23 einwirken.

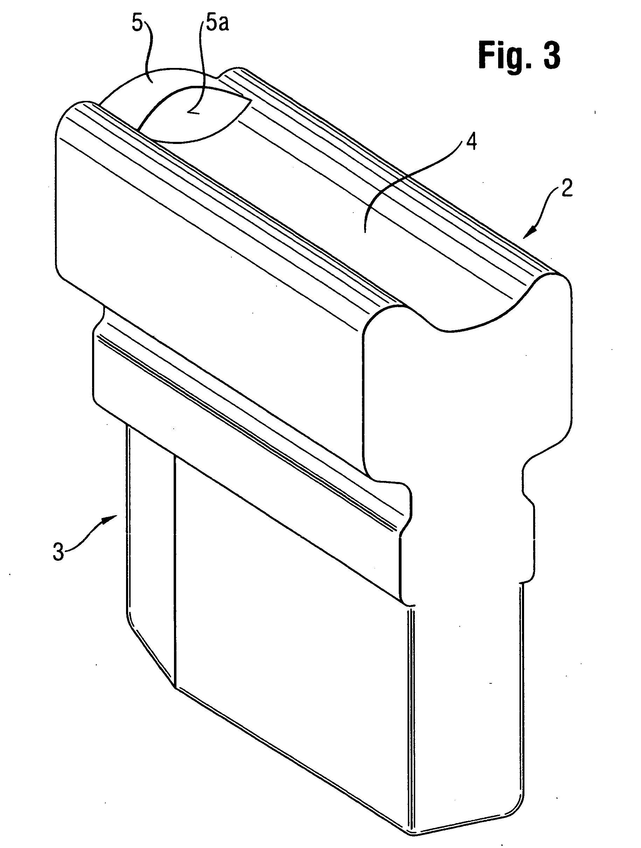

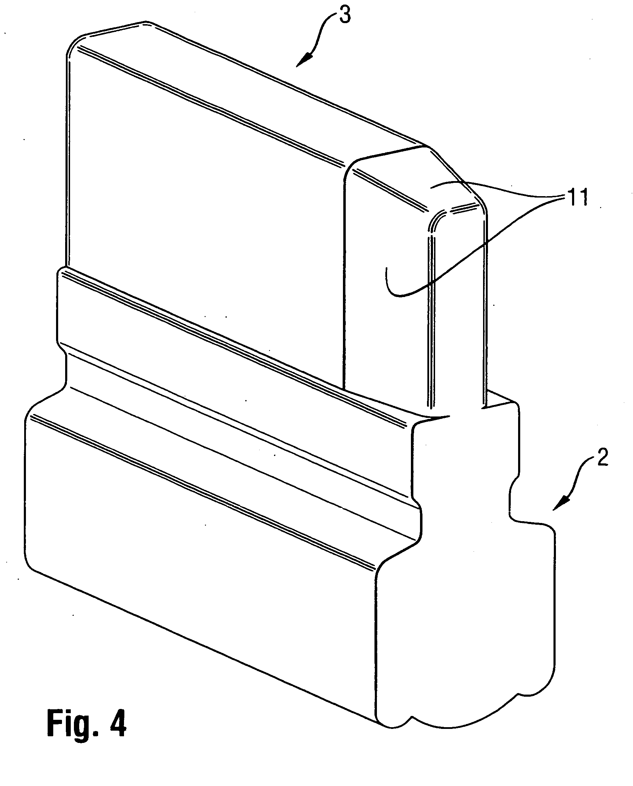

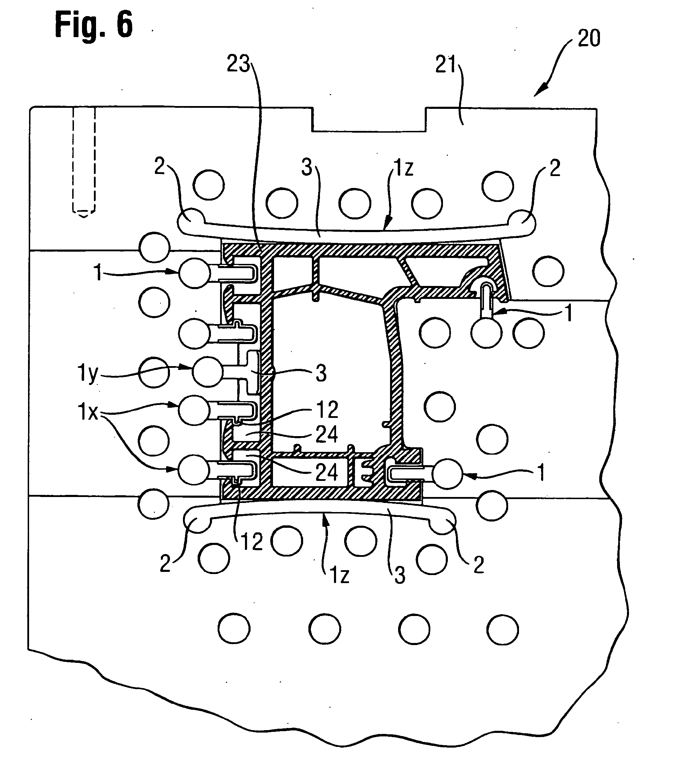

Eine alternative Kalibrierplatte 20 ist in Fig. 6 dargestellt. Hier ist eine größere Anzahl von Einsatzteilen 1, 1x, 1y 1z vorgesehen. Die Einsatzteile 1 entsprechen dabei der Ausführungsvariante, wie sie in Fig. 1 bis Fig. 4 dargestellt ist. Die Einsatzteile 1x besitzen zusätzlich Vorsprünge 12, die eine Nut 24 des Profils 23 hintergreifen, um eine exakte Nutausbildung zu erreichen. Die Einsatzteile 1y besitzen einen T-förmig ausgebildeten Formgebungsabschnitt 3 zur Ausformung ebener Oberflächenabschnitte des Profils 23. Die Einsatzteile 1z besitzen einen großflächigen schwach gekrümmten Formgebungsabschnitt 3, der von zwei Halteabschnitten 2 im Grundkörper 21 der Kalibrierplatte 20 gehalten wird, um Sichtflächen entsprechend auszubilden.

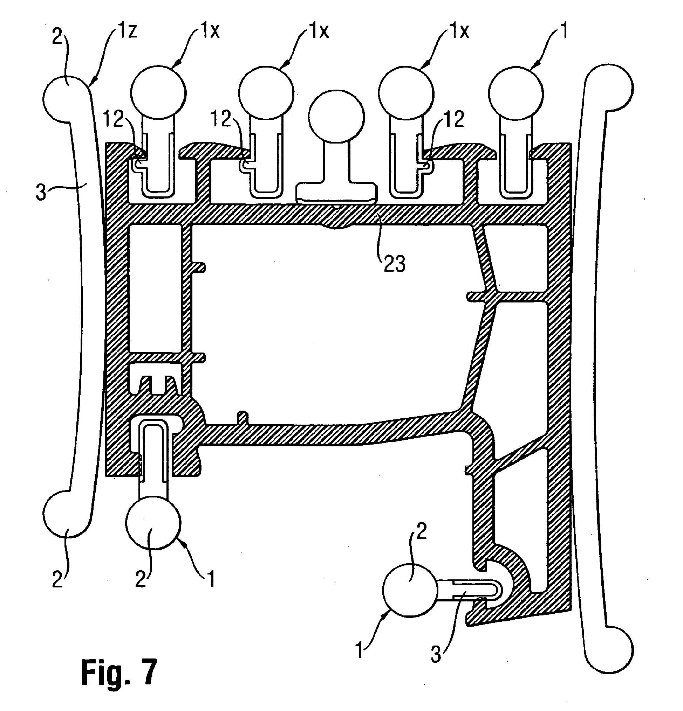

Fig. 7 zeigt das Profil 23 samt Einsatzteilen 1, 1x, 1y und 1z in vergrößertem Maßstab im Detail. Aus Fig. 7 ist ersichtlich, dass das Profil 23 in seiner geometrischen Sollform von den Einsatzteilen 1, 1x, 1y und 1z teilweise durchdrungen wird. Dies hat seinen Grund darin, dass die Einsatzteile 1, 1x, 1y und 1z in der Kalibrierplatte 20 so angeordnet sind, dass das Profil 23 teilweise verdrängt wird und sich elastisch verformen muss, wodurch entsprechende Anpresskräfte zur Kalibrierung des Profils 23 erzeugt werden.

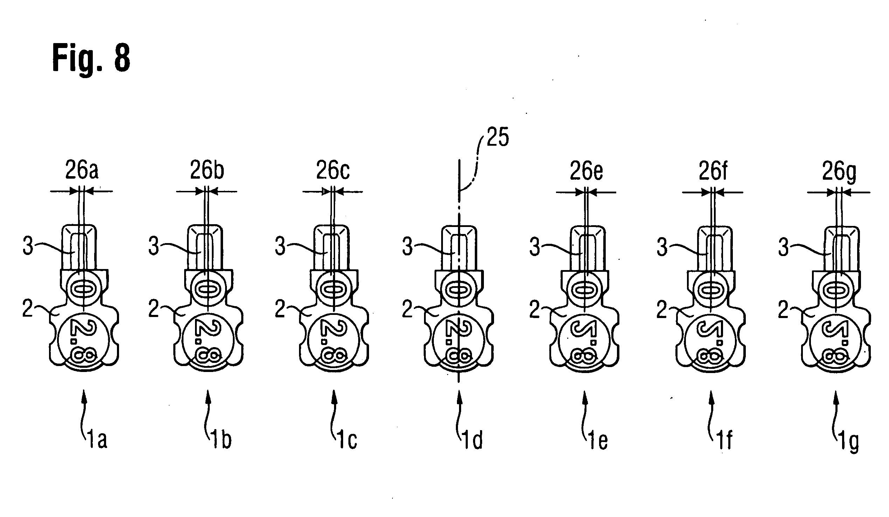

Fig. 8 zeigt beispielhaft einen Bausatz von sieben Einsatzteilen 1a, 1b, 1c, 1d, 1e, 1f, 1g, wobei der Einsatzteil 1d die Nennabmessungen aufweist und symmetrisch bezüglich einer senkrechten Ebene 25 ist. Die Einsatzteile 1a, 1b, 1c unterscheiden sich von dem Einsatzteil 1d dadurch, dass der Formgebungsabschnitt 3 gegenüber dem Halteabschnitt 2 um ein vorbestimmtes geringfügiges Maß 26a, 26b, 26c nach links versetzt ist. Umgekehrt besitzen die Einsatzteile 1e, 1f und 1g ein Verschiebungsmaß 26e, 26f, 26g nach rechts. Die Maße 26a, 26b, 26e, 26f, 26g sind passend abgestuft, beispielsweise in Schritten von 0,1 mm. Wenn sich nun bei der Erstabstimmung die mit dem Einsatzteil 1d begonnen wird, herausstellt, dass zur Optimierung des Profils 23 eine unterschiedliche Geometrie des Einsatzteils benötigt wird, wird der Einsatzteil 1d entnommen und durch einen der übrigen Einsatzteile 1a, 1b, 1c bzw. 1e, 1f, 1g ersetzt. Auf diese Weise kann die Geometrie der Kalibrierplatte 20 problemlos an die jeweiligen Erfordernisse angepasst werden, ohne eine Materialbearbeitung vornehmen zu müssen.

Die vorliegende Erfindung ermöglicht es Kalibrierwerkzeuge herzustellen, die wesentlich einfacher und leichter abzustimmen sind und eine höhere Standzeit aufweisen, als bekannte Werkzeuge.

## Patentansprüche

1. Kalibrierplatte für ein Extrusionswerkzeug zur Herstellung von Kunststoffprofilen mit einem im Wesentlichen plattenförmigen Grundkörper (21), in dem eine Öffnung (22) zur Führung und Kalibrierung des herzustellenden Kunststoffprofils (23) vorgesehen ist, wobei in den Grundkörper (21) mindestens ein Einsatzteil (1) aus einem Werkstoff mit großer Härte eingesetzt ist, der mindestens einen Halteabschnitt (2) und einen Formgebungsabschnitt (3) aufweist, wobei sowohl der Halteabschnitt (2) als auch der Formgebungsabschnitt (3) teilweise als Zylinderflächen mit zur Extrusionsachse (6) parallelen Erzeugenden ausgebildet sind, und wobei der Einsatzteil (1) in Axialrichtung durch einen Begrenzungsanschlag (5) im plattenförmigen Grundkörper (21) gehalten sind, **dadurch gekennzeichnet, dass** der Halteabschnitt (2) eine Nut (4) aufweist, die sich in Extrusionsrichtung (6a) erstreckt, und die in einem Bereich des Halteabschnitts (2) liegt, der dem Formgebungsabschnitt (3) genau gegenüberliegt, und dass an einem Ende der Nut der Begrenzungsanschlag (5) ausgebildet ist, der aus der Nut (4) vorragt.

2. Kalibrierplatte nach Anspruch 1, **dadurch gekennzeichnet, dass** die Nut (4) des Halteabschnitts (2) einen Querschnitt in der Form eines Kreisabschnitts aufweist.

3. Kalibrierplatte nach einem der Ansprüche 1 oder 2, **dadurch gekennzeichnet, dass** der Halteabschnitt (2) außerhalb der Nut (4) nur aus Zylinderflächen (9) mit zur Extrusionsachse (6) parallelen Erzeugenden besteht.

4. Kalibrierplatte nach einem der Ansprüche 1 bis 3, **dadurch gekennzeichnet, dass** der Halteabschnitt (2) eine größte Breite aufweist, die größer ist als die größte Breite des Formgebungsabschnitts (3).

5. Kalibrierplatte nach einem der Ansprüche 1 bis 3, **dadurch gekennzeichnet, dass** der Begrenzungsanschlag (5) am stromaufwärtigen Ende des Halteabschnitts (2) angeordnet ist.

6. Kalibrierplatte nach Anspruch 5, **dadurch gekennzeichnet, dass** der Begrenzungsanschlag (5) innerhalb eines Bereichs angeordnet ist, der nicht mehr als 10%, vorzugsweise nicht mehr als 6% der Länge des Einsatzteils (1) gerechnet von der stromaufwärtigen Stirnfläche ausmacht:

7. Kalibrierplatte nach einem der Ansprüche 1 bis 6, **dadurch gekennzeichnet, dass** der Begrenzungsanschlag (5) eine zur Extrusionsachse (6) geneigte Anschlagfläche (5a) aufweist.

8. Kalibrierplatte nach einem der Ansprüche 1 bis 7, **dadurch gekennzeichnet, dass** der Formgebungsabschnitt (3) zwei zueinander parallele Längsseiten (10) aufweist.

9. Kalibrierplatte nach einem der Ansprüche 1 bis 8, **dadurch gekennzeichnet, dass** der Einsatzteil (1) durch Pulverspritzguss hergestellt ist.

10. Kalibrierplatte nach einem der Ansprüche 1 bis 9, **dadurch gekennzeichnet, dass** ein Bausatz von Einsatzteilen (1a, 1b, 1c, 1d, 1e, 1f, 1g) zur Verfügung steht, die einen Formgebungsabschnitt (3) aufweisen, der in unterschiedlichen Ausmaß gegenüber dem Halteabschnitt (2) versetzt ist.

## Claims

1. A calibrating plate for an extrusion die for producing plastic profiles, comprising a substantially plate-shaped basic body (21), in which an opening (22) for guiding and calibrating the plastic profile (23) to be produced is provided, with at least one insert part (1) made of a material with high hardness being inserted into the basic body (21), which insert part comprises at least one holding section (2) and a shaping section (3), with both the holding section (2) as well as the shaping section (3) being formed partly as cylindrical surfaces with generatrices parallel to the extrusion axis (6), and with the insert part (1) being held in the axial direction in the plate-shaped basic body (21) by a delimiting stop (5), **characterised in that** the holding section (2) comprises a groove (4) which extends in the direction of extrusion (6a) and which is situated in a region of the holding section (2) which is precisely opposite of the shaping section (3), and that the delimitation stop (5) is arranged at one end of the groove (4), which stop protrudes from the groove (4).

2. A calibrating plate according to claim 1, **characterised in that** the groove (4) of the holding section (2) has a cross section in the form of a segment of a circle.

3. A calibrating plate according to one of the claims 1 or 2, **characterised in that** the holding section (2) outside of the groove (4) consists only of cylindrical surfaces (9) with generatrices which are parallel to the extrusion axis (6).

4. A calibrating plate according to one of the claims 1 to 3, **characterised in that** the holding section (2) has a largest width which is larger than the largest width of the shaping section (3).

5. A calibrating plate according to one of the claims 1 to 3, **characterised in that** the delimitation stop (5) is arranged at the upstream end of the holding section (2).

6. A calibrating plate according to claim 5, **characterised in that** the delimitation stop (5) is arranged within a section which does not amount to more than 10%, preferably not more than 6% of the length of the insert part (1), calculated from the upstream face surface.

7. A calibrating plate according to one of the claims 1 to 6, **characterised in that** the delimitation stop (5) has a stop surface (5a) which is inclined relative to the extrusion axis (6).

8. A calibrating plate according to one of the claims 1 to 7, **characterised in that** the shaping section (3) comprises two longitudinal sides (10) which are parallel to each other.

9. A calibrating plate according to one of the claims 1 to 8, **characterised in that** the insert part (1) is produced by powder injection molding.

10. A calibrating plate according to one of the claims 1 to 9, **characterised in that** a kit of insert parts (1a, 1b, 1c, 1d, 1e, 1f, 1g) is available, which insert parts comprise a shaping section (3) which is offset to a different extent relative to the holding section (2).

## Revendications

1. Plaque de calibrage pour un outil d'extrusion servant à fabriquer des profilés en matière plastique comportant :
un corps de base (21) principalement en forme de plaque, muni d'une ouverture (22) pour guider et calibrer le profilé en matière plastique (23), à fabriquer,
le corps de base (21) recevant au moins un insert (1) en un matériau de dureté plus grande, ayant au moins un segment de fixation (2) et un segment de mise en forme (3),
au moins un segment de fixation (2) et aussi le segment de mise en forme (3), étant réalisés en partie sous la forme de surfaces cylindriques engendrées par des génératrices parallèles à l'axe d'extrusion (6), et
la partie formant insert (1) est tenue dans la direction axiale par une butée (5) du corps de base (21) en forme de plaque,
**caractérisée en ce que**
le segment de maintien (2) comporte une gorge (4) s'étendant dans la direction d'extrusion (6a) et située dans une zone du segment de fixation (2), directement à l'opposé du segment de mise en forme (3), et
la butée (5) est réalisée à une extrémité de la rainure et dépasse de cette rainure (4).

2. Plaque de calibrage selon la revendication 1,
**caractérisée en ce que**
la rainure (4) du segment de fixation (2), a une section en forme de secteur circulaire.

3. Plaque de calibrage selon la revendication 1 ou 2,
**caractérisée en ce que**
le segment de fixation (2) se compose en dehors de la rainure (4), seulement d'une surface cylindrique (9) engendrée par des génératrices parallèles à l'axe d'extrusion (6).

4. Plaque de calibrage selon les revendications 1 à 3,
**caractérisée en ce que**
le segment de fixation (2) a une largeur plus grande, supérieure à la plus grande largeur du segment de mise en forme (3).

5. Plaque de calibrage selon les revendications 1 à 3,
**caractérisée en ce que**
la butée de limitation (5) est prévue à l'extrémité amont du segment de fixation (2).

6. Plaque de calibrage selon la revendication 5,
**caractérisée en ce que**
la butée de limitation (5) est prévue dans une zone qui ne représente pas plus de 10 % et, de préférence, pas plus de 6 % de la longueur de l'insert (1), calculée à partir de la surface frontale amont.

7. Plaque de calibrage selon les revendications 1 à 6,
**caractérisée en ce que**
la butée de limitation (5) a une surface de butée (5a) inclinée par rapport à l'axe d'extrusion (6).

8. Plaque de calibrage selon les revendications 1 à 7,
**caractérisée en ce que**
le segment de mise en forme (3) comporte deux grands côtés (10), parallèles l'un à l'autre.

9. Plaque de calibrage selon les revendications 1 à 8,
**caractérisée en ce que**
l'insert (1) est fabriqué par injection de poudre.

10. Plaque de calibrage selon les revendications 1 à 9,
**caractérisée en ce qu'**
on dispose d'un jeu de pièces séparées (1a, 1b, 1c, 1d, 1e, 1f, 1g), tournées vers le segment de mise en forme (3), et décalées à des degrés différents par rapport au segment de fixation (2).
